# EUROPÄISCHE PATENTSCHRIFT

(11) **EP 3 566 584 B1**
(45) Veröffentlichungstag und Bekanntmachung des Hinweises auf die Patenterteilung: **09.12.2020**
(21) Anmeldenummer: 19172385.7
(22) Anmeldetag: 02.05.2019
(51) Int. Cl.: A22C 11/02

(54) **VERFAHREN ZUM BESTÜCKEN EINES FÜLLROHRS SOWIE VORRICHTUNG ZUM BEFÜLLEN VON SCHLAUCHFÖRMIGEN HÜLLEN**
METHOD FOR FITTING A FILLING TUBE AND DEVICE FOR FILLING TUBULAR CASINGS
PROCÉDÉ DE MONTAGE D'UN TUBE DE REMPLISSAGE AINSI QUE DISPOSITIF DE REMPLISSAGE DES ENVELOPPES TUBULAIRES

(30) Priorität: 07.05.2018 DE 102018110888
(43) Veröffentlichungstag der Anmeldung: 13.11.2019
(73) Patentinhaber: VEMAG Maschinenbau GmbH, 27283 Verden/Aller (DE)
(72) Erfinder: Mach, Matthias, 30539 Hannover (DE); Hagedorn, Jan-Nils, 27283 Verden (DE); Matthies, Heiner, 27419 Kalbe (DE); Grote, Olaf, 27324 Eystrup (DE); Lewin, Alexander, 27283 Verden (DE)
(74) Vertreter: Eisenführ Speiser

(56) Entgegenhaltungen:
- EP-A1- 0 962 143
- EP-A1- 3 449 727
- EP-A2- 2 384 634
- EP-B1- 1 750 517
- US-A1- 2004 038 635

## Beschreibung

Die Erfindung betrifft ein Verfahren zum Bestücken mindestens eines Füllrohrs einer Vorrichtung zum Befüllen von schlauchförmigen Hüllen mit einer gerafften, schlauchförmigen Hülle, mindestens aufweisend die Schritte: Öffnen mindestens eines Greifelements einer Hüllen-Greifeinrichtung, Zuführen einer gerafften, schlauchförmigen Hülle in einen Bereich des mindestens einen Greifelements der Hüllenreifeinrichtung,
Schließen mindestens eines Greifelementes zur Fixierung und axialen Zentrierung der Hülle entlang einer Längsachse eines Füllrohrs.

Die Erfindung betrifft ferner eine Vorrichtung zum Füllen von schlauchförmigen Hüllen, mit einer Zuführeinrichtung zum Zuführen einer gerafften, schlauchförmigen Hülle zu einer Hüllen-Greifeinrichtung, einer Hüllen-Greifeinrichtung mit relativ zueinander bewegbaren Greifelementen zum Greifen und Ausrichten einer gerafften, schlauchförmigen Hülle relativ zu einer Zentrierachse, und einem Füllrohr zur Abgabe einer pastösen Massen, welches zur Aufnahme der gerafften, schlauchförmigen Hülle ausgebildet ist. Weiterhin betrifft die Erfindung ein System zum Befüllen geraffter, schlauchförmiger Hüllen.

Derartige Verfahren, Vorrichtungen und Systeme zum Bestücken eines Füllrohrs und zum Befüllen schlauchförmiger Hüllen sind im Stand der Technik bekannt. Zur industriellen Wurstproduktion sind Vorrichtungen vorbekannt, bei denen eine zu füllende, schlauchförmige Hülle in einem gerafften Zustand (auch als Darmraupe oder geraupter Darm bezeichnet) automatisiert auf ein Füllrohr aufgebracht wird. An dessen offenem Ende tritt sodann Wurstbrät aus selbigem aus und wird in die auf dem Füllrohr aufgebrachte schlauchförmige Hülle abgegeben.

Durch abschnittsweises Verschließen der Hüllen, beispielsweise durch abschnittsweises Verdrehen einzelner gefüllter Hüllenabschnitte relativ zueinander, oder durch andere Maßnahmen, wird der kontinuierliche Hüllenstrang nach der Füllung mit Wurstbrät in einzelne Würste separiert.

Zur Beschleunigung des Herstellungsprozesses sind im Stand der Technik Füllvorrichtungen offenbart, bei denen mehrere, insbesondere zwei oder drei Füllrohre auf einem parallel zur Füllrohrlängsachse rotierbaren Grundkörper mit einem Aufnahmeteil angeordnet sind, wobei das Aufnahmeteil zusammen mit den Füllrohren revolverartig rotierbar ist. Mittels einer solchen Anordnung werden die Bestückung des Füllrohrs mit einer gerafften, schlauchförmigen Hülle und die eigentliche Befüllung der Hülle in unterschiedlichen Betriebspositionen ausgeführt.

Das Aufbringen der gerafften, schlauchförmigen Hülle auf das Füllrohr in einer sogenannten Beschickungsposition ist bei Vorrichtungen, welche aus dem Stand der Technik vorbekannt sind, weiter automatisiert. So ist insbesondere vorbekannt, dass die gerafften, schlauchförmigen Hüllen mittels Magazinschiebern aus einem Magazin entnommen werden und mittels der Greifer anschließend so vor dem Füllrohr positioniert werden, dass die Hülle auf das Füllrohr aufgeschoben werden kann, insbesondere mittels eines Aufschiebers.

Nach dem Aufschieben der Darmraupe auf das Füllrohr wird dieses in eine Füllposition rotiert. In dieser Füllposition erfolgt das Befüllen der gerafften, schlauchförmigen Hüllen.

EP 2 384 634 A2 betrifft eine Darmgreifvorrichtung für geraffte Darmraupen zur Verwendung an einer Wurstfüllmaschine, welche zwei relativ zueinander bewegbare Greifelemente aufweist. Zum Bewegen der Greifelemente sind diese beweglich an einem verschwenkbaren Hebelelement gelagert.

Die aus dem Stand der Technik vorbekannten Vorrichtungen und Bestückungsverfahren ermöglichen es, Füllrohre mit gerafften, schlauchförmigen Hüllen automatisiert zu bestücken. Allerdings ist beobachtet worden, dass bei einem greiferunterstützten Bestücken des Füllrohrs, Beschädigungen der gerafften, schlauchförmigen Hüllen, insbesondere an deren Knoten, auch als Pushback bezeichnet, auftreten können. Auch hat sich herausgestellt, dass die Anordnung von zwei oder mehr Füllrohren auf die oben beschriebene Art nicht für jede Produktionsanwendung erforderlich und vorteilhaft ist.

Vor diesem Hintergrund lag der Erfindung die Aufgabe zugrunde, ein Verfahren, eine Vorrichtung, und ein System der eingangs bezeichneten Art dahingehend weiterzubilden, dass die im Stand der Technik aufgefundenen Nachteile möglichst weitgehend behoben werden. Mindestens jedoch soll eine Alternative zu den aus dem Stand der Technik vorbekannten Vorrichtungen und Verfahren angegeben werden. Insbesondere soll ein Verfahren zum Bestücken eines Füllrohrs sowie eine Vorrichtung zum Befüllen von schlauchförmigen Hüllen angegeben werden, welche einen schonenden Bestückungsvorgang einer gerafften, schlauchförmigen Hülle auf ein Füllrohr gewährleistet. Die Vorrichtung soll gleichermaßen kompakt und wartungsarm ausgebildet sein.

Erfindungsgemäß wird die Aufgabe bei einem Verfahren zum Bestücken eines Füllrohrs der eingangs genannten Art gelöst durch die Verfahrensschritte des Anspruchs 1, insbesondere: Bewegen des Füllrohrs und/oder der Greifeinrichtung relativ zueinander aufeinander zu zum Einbringen des Füllrohrs in einen Hülleninnenraum, partielles Öffnen mindestens eines Greifelements, Weiterbewegen des Füllrohrs und/oder der Greifeinrichtung relativ zueinander aufeinander zu, wobei die Hülle durch die Greifelemente geführt wird.

Es hat sich als vorteilhaft erwiesen, das Füllrohr bei geschlossenen Greifelementen, wobei in diesem Fall die Hülle durch die Greifelemente gehalten wird und jedenfalls eine axiale Verschiebbarkeit der Hülle unterbunden wird, zunächst zumindest teilweise in den Hülleninnenraum einzubringen. Die Hülle wird sodann sowohl durch die Greifer als auch durch das Füllrohr zentriert. Ein anschließend vorgenommenes partielles Öffnen der Greifelemente gibt eine Axialbeweglichkeit der Hülle frei, wobei bei einer weiteren Bewegung des Füllrohrs und/oder der Greifeinrichtung aufeinander zu eine Führung der Hülle durch die Greifelemente erfolgt. Dieses hat sich als besonders geeignet erwiesen, Beschädigungen der gerafften, schlauchförmigen Hüllen beim Bestückungsvorgang des Füllrohrs zu reduzieren.

Gemäß einer ersten alternativen Ausführungsform wird dabei das Füllrohr axial relativ zu einer axial ortsfesten Greifeinrichtung bewegt. Gemäß einer zweiten alternativen Ausführungsform wird die Greifeinrichtung relativ zu einem axial ortsfesten Füllrohr bewegt.

Weiterhin vorzugsweise kann der Grad des Eindringens des Füllrohrs in den Hülleninnenraum flexibel gewählt werden, und insbesondere angepasst werden auf die Hüllenlänge sowie die Dimensionen des Füllrohrs, etwa die Füllrohrlänge oder den Füllrohrdurchmesser.

Gemäß einer bevorzugten Ausführungsform erfolgt das Einbringen des Füllrohrs in den Hülleninnenraum bis zum Inkontakttreten des Füllrohrs mit einem Endabschnitt der Hülle. Dabei weist der Endabschnitt der Hülle einen Verschluss auf, der beispielweise als Knoten oder Stopfen ausgebildet sein kann. Mit anderen Worten wird das Füllrohr vorzugsweise bei geschlossenen Greifelementen bis an den Verschluss, der sich in dem Endabschnitt befindet, in den Hülleninnenraum eingebracht.

Im Allgemeinen wird vorzugsweise eine weiter fortgeführte Relativbewegung bei geschlossenen Greifelementen vermieden, um eine Beschädigung des Verschlusses oder eine Beschädigungen der Hülle im Bereich des Verschlusses zu vermeiden.

Gemäß einer alternativen Ausführungsform wird das Füllrohr lediglich teilweise in den Hülleninnenraum eingebracht. Dieses hat sich als vorteilhaft erwiesen, um die Zentrierung der Hülle auf dem Füllrohr zwar grundlegend durch das teilweise Einbringen des Füllrohr in die Hülle herzustellen, eine Beschädigung der Hülle jedoch zu verhindern, die sich aufgrund des Druckes der Greifelemente auf die Hülle bei weiterem Vorschieben des Füllrohrs ergeben könnte.

Das Verfahren wird durch den Schritt weitergebildet: Axialbewegung des Füllrohrs und/oder einer Darmbremse in eine Befüllposition, bei welcher der Endabschnitt der Hülle mit der Darmbremse in Kontakt tritt.

Für ein Ausführungsbeispiel, bei dem das Füllrohr axialbeweglich angeordnet ist, erfolgt durch die Axialbewegung des Füllrohrs in die Befüllposition ein weiteres Aufschieben der Hülle auf das Füllrohr, für den Fall, dass diese noch nicht vollständig auf das Füllrohr aufgebracht war. In diesem Fall wird die Hülle zunächst bei leicht geöffneten Greifelementen durch die Axialbewegung des Füllrohrs von dem Füllrohr mitgenommen und durch die Greifelemente axial geführt. Trifft die Hülle nun auf einen durch die Darmbremse ausgebildeten Anschlag auf, so führt eine weitere Axialbewegung des Füllrohrs in Richtung der Darmbremse dazu, dass die Hülle durch die Darmbremse in ihrer Axialbewegung gehemmt wird und somit ein weiteres Verschieben des Füllrohrs in Richtung der Darmbremse zur Folge hat, dass das Füllrohr weiter in den Hülleninnenraum eindringt und zwar solange, bis das Füllrohr die Befüllposition erreicht hat.

Für den Fall, dass die Hülle bereits vollständig auf das Füllrohr aufgebracht war, erfolgt bei Axialbewegung des Füllrohrs in Richtung der Darmbremse eine sowohl durch das Füllrohr selbst als auch durch die leicht geöffneten Greifelemente geführte Bewegung der Hülle in Richtung der Befüllposition.

Das Verfahren wird durch die Schritte weitergebildet: Befüllen der Hülle, insbesondere mit einer pastösen Masse, Öffnen mindestens eines Greifelements, insbesondere kontinuierlich oder schrittweise. Dabei ist bevorzugt, dass nach einem insbesondere vollständigen Befüllen der Hülle - wobei nach einer vollständigen Verarbeitung der Hülle typischerweise keine Rückstände derselben auf dem Füllrohr verbleiben - eine Öffnung mindestens eines Greifelementes erfolgt, und das Verfahren sodann ausgehend von einem ersten Verfahrensschritt erneut erfolgen kann.

Gemäß einer bevorzugten Weiterbildung weist das Verfahren die Schritte auf: Ermitteln des Hüllendurchmessers, und/oder Detektieren einer Fehlbeladung der Greifelemente. Durch eine sensorbasierte Überwachung des oder der Greifelemente sowie vorzugsweise eine Überwachung der Kräfte, die beim axialen Verschieben des Füllrohrs und/oder der Greifelemente auftreten, kann sichergestellt werden, dass die Hülle korrekt auf das Füllrohr aufgebracht wird und auch korrekt durch die Greifelemente geführt wird.

Weichen etwa die an der Greifeinrichtung anliegenden Kräfte und/oder die mit einer Relativbewegung von Füllrohr und Greifeinrichtung verbundenen Kräfte ab von einem Normbereich, so wird vorzugsweise ein Alarm generiert und besonders bevorzugt die Vorrichtung gestoppt. Insbesondere für jenen Zustand, in welchem die Greifelemente so geschlossen sind, dass sie in unmittelbarem Kontakt stehen mit der Hülle, lässt sich aus der Position der Greifelemente ein Rückschluss auf den Hüllendurchmesser der zu verarbeitenden Hülle ziehen, womit eine Verwendung ungeeigneter Hüllen, etwa von Hüllen, die nicht kompatibel sind zu dem Füllrohrdurchmesser, vermeiden lässt.

Gemäß einer vorteilhaften Weiterbildung der Erfindung weist das Verfahren den Schritt auf: Nachführen der Hülle in Richtung der Darmbremse während des Befüllens der Hülle. Ein solches axiales Nachführen der Hülle hat sich als vorteilhaft zu Erhöhung der Füllgeschwindigkeit erwiesen.

Die Erfindung ist vorstehend unter Bezugnahme auf Verfahrensaspekte beschrieben worden. In einem weiteren Aspekt betrifft die Erfindung eine Vorrichtung zum Befüllen von schlauchförmigen Hüllen gemäß Anspruch 8, mit einer Zuführeinrichtung zum Zuführen einer gerafften, schlauchförmigen Hülle zu einer Hüllen-Greifeinrichtung, einer Hüllen-Greifeinrichtung mit relativ zueinander bewegbaren Greifelementen zum Greifen und Ausrichten einer gerafften, schlauchförmigen Hülle relativ zu einer Zentrierachse, einem Füllrohr zur Abgabe einer pastösen Masse, welches zur Aufnahme der gerafften, schlauchförmigen Hülle ausgebildet ist.

Die Erfindung löst die eingangs bezeichnete Aufgabe in Bezug auf die Befüllvorrichtung, indem das Füllrohr und/oder die Hüllen-Greifeinrichtung relativ zueinander axial beweglich angeordnet sind, und durch eine Steuerungseinrichtung, die dazu eingerichtet ist, die folgenden Schritte auszuführen: Bewegen des Füllrohrs und/oder der Greifeinrichtung relativ zueinander aufeinander zu zum Einbringen des Füllrohrs in einen Hülleninnenraum, partielles Öffnen mindestens eines Greifelements, Weiterbewegen des Füllrohrs und/oder der Greifeinrichtung relativ zueinander aufeinander zu, wobei die Hülle durch die Greifelemente geführt wird.

Die Vorrichtung macht sich die gleichen Vorteile und bevorzugten Ausführungsformen zunutze wie das erfindungsgemäße Verfahren. Diesbezüglich wird auf die obigen Ausführungen verwiesen und deren Inhalt hier einbezogen.

Gemäß einer bevorzugten Weiterbildung weist die Vorrichtung eine Detektiereinrichtung zur Detektion der Position mindestens eines der Greifelemente und/oder der Axialposition des Füllrohrs und/oder der Greifeinrichtung auf. Aus den Positionsdaten lassen sich vielfältige Rückschlüsse ziehen auf Betriebsparameter, wie beispielsweise den Hüllendurchmesser, und es lässt sich sicherstellen, dass das Füllrohr so mit der Hülle in Kontakt tritt, bzw. in diese eingebracht wird, dass eine Beschädigung eines Endabschnittes der Hülle, welcher typischerweise einen Knoten aufweist, der empfindlich gegenüber Beschädigungen ist, vermieden wird.

Weiterhin bevorzugt weist die Detektiereinrichtung einen Kraftsensor zur Ermittlung der an den Greifelementen und/oder dem Füllrohr auftretenden Kräfte auf. Ferner ist bevorzugt, dass die Steuerungseinrichtung dazu eingerichtet ist, den Durchmesser der Hüllen und/oder eine Fehlbeladung der Greifelemente zu ermitteln. Eine genaue Kenntnis über typischerweise zu erwartende Kräfte und Abweichungen hiervon ermöglicht eine Detektion von sogenannten Fehlbeladungsvorgängen, bei denen eine Hülle fehlerhaft auf das Füllrohr aufgebracht worden ist, oder auch fehlerhaft von den Greifelementen erfasst worden ist. Eine Erhöhung, beispielsweise der zum Vorschub des Füllrohrs erforderlichen Kraft, lässt Rückschlüsse darüber zu, dass beispielsweise eine Hülle, die naturgemäß nicht stets vollständige gerade ausgebildet ist, sich etwa beim Einschieben des Füllrohrs in den Hülleninnenraum verkantet hat. Auf Basis einer solchen Information kann vorzugsweise der Betrieb der Füllvorrichtung gestoppt werden.

Die Erfindung wird dadurch weitergebildet, dass das Füllrohr rotierbar gelagert ist und insbesondere antreibbar ist. Durch die Rotation oder Rotierbarkeit des Füllrohrs wird die Ausbildung einzelner Würstchen aus einem Hüllenstrang insbesondere dahingehend ermöglicht, dass einzelne Hüllenabschnitte relativ zueinander verdreht werden, womit sich einzelne Kammern in der Hülle und mithin einzelne Würstchen ausbilden. Gemäß einer alternativen Ausführungsform ist das Füllrohr nicht-rotierbar ausgebildet.

Gemäß einer weiteren bevorzugten Ausführungsform weist die Vorrichtung eine Darmbremsvorrichtung auf. Diese dient bei einem rotierenden Füllrohr insbesondere, wie oben beschrieben, zur Ausbildung der einzelnen Würstchen. Ist das Füllrohr nicht-rotierbar ausgebildet, ist ferner bevorzugt, dass die Darmbremsvorrichtung rotierbar ausgebildet ist, zur Ausbildung der einzelnen Würstchen.

In einem weiteren Aspekt wird die der Erfindung zugrundeliegende Aufgabe durch ein System zum Befüllen geraffter, schlauchförmiger Hüllen, mit einer Füllmaschine zum Bereitstellen einer pastösen Masse für eine Vorrichtung zum Befüllen von schlauchförmigen Hüllen, und einer Vorrichtung zum Befüllen von schlauchförmigen Hüllen, gemäß einem der vorhergehenden Ausführungsbeispiele gelöst.

Das System macht sich die gleichen Vorteile und bevorzugten Ausführungsformen zunutze, wie die erfindungsgemäße Vorrichtung. Diesbezüglich wird auf die obigen Ausführungen verwiesen und deren Inhalt hiermit einbezogen.

Nachfolgend wird die Erfindung anhand bevorzugter Ausführungsbeispiele unter Bezugnahme auf die nachfolgenden Figuren näher beschrieben. Hierbei zeigen:
- Fig. 1:: eine perspektivische Ansicht einer erfindungsgemäßen Maschine zum Füllen schlauchförmiger Hüllen;
- Fig. 2:: eine Seitenansicht der erfindungsgemäßen Füllmaschine gemäß Fig. 1;
- Fig. 3:: eine Draufsicht der erfindungsgemäßen Füllmaschine gemäß Fig. 1;
- Fig. 4, 5:: perspektivische Ansichten eines vergrößerten Ausschnitts der erfindungsgemäßen Füllmaschine nach Fig. 1;
- Fig. 6a-13b:: perspektivische Ansichten wesentlicher Bauteile der Füllmaschine nach Fig. 1 während der Abfolge aufeinanderfolgender Verfahrensschritte.

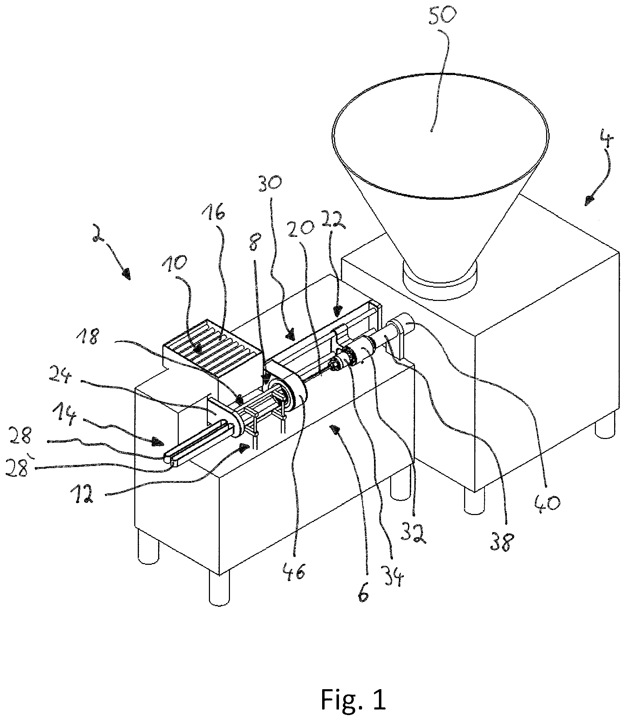

Fig. 1 zeigt eine Füllmaschine 4 zum Füllen schlauchförmiger Hüllen 16, insbesondere von Kunst- oder Naturdärmen, in Verbindung mit einem Vorsatzgerät 2, dem eine Füllvorrichtung 6 und eine Füllrohrbestückungsvorrichtung 8 zugeordnet sind. Die Maschine 4 weist ferner einen Fülltrichter 50 und einen Extrusionskopf 40 auf, der mit der Füllvorrichtung 6 gekoppelt ist.

Die Füllrohrbestückungsvorrichtung 8 umfasst ein Hüllenmagazin 10 zur Aufnahme einer Vielzahl schlauchförmiger Hüllen 16 sowie eine Hüllen-Greifeinrichtung 12. Ferner ist an dem Vorsatzgerät 2 eine Fördereinrichtung 14 mit zwei im Abstand zueinander in einer horizontalen Ebene verlaufenden Förderelementen 28 sowie 28' angeordnet. Die Fördereinrichtung 14 dient dem Transport der von der Füllvorrichtung 6 hergestellten Würste 26 (in der Fig. 1 nicht gezeigt).

Die Füllvorrichtung 6 dient dem Füllen der schlauchförmigen Hüllen 16 mittels der seitens des Extrusionskopfes 40 zugeführten pastösen Masse. Der Extrusionskopf 40 ist dabei exemplarisch mittels eines beweglichen Leitungsabschnitts 38 fluidleitend verbunden mit einem Füllrohr 20. Das Füllrohr 20 ist in einer Füllrohraufnahme 34 angeordnet, welche drehbar in einem Grundkörper 32 gelagert ist. Dieser Grundkörper 32 wiederum ist mit einer Füllrohrverstelleinrichtung 22 verbunden. Die Füllrohrverstelleinrichtung 22 weist eine Führung 30 auf, mit deren Hilfe der Grundkörper 32 inklusive der Füllrohraufnahme 34 axial entlang einer Füllrohrlängserstreckung bewegbar ist.

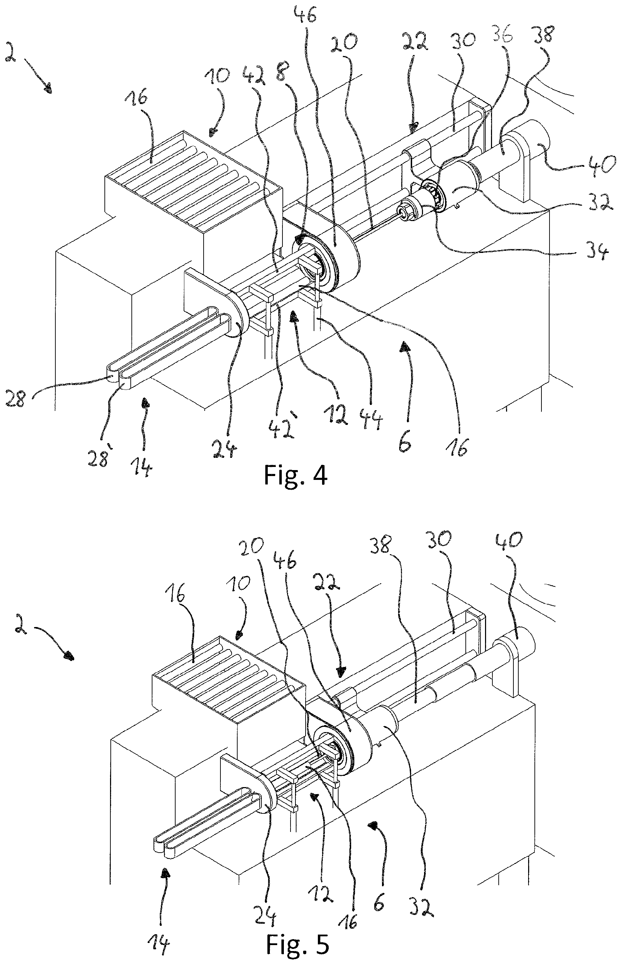

Mittels des beweglichen Leitungsabschnitts 38 wird erreicht, dass in allen Positionen, die die Füllrohrverstelleinrichtung 22 einnehmen kann, sichergestellt ist, dass die pastöse Masse von dem Extrusionskopf 40 zu dem Füllrohr 20 über die Füllrohraufnahme 34 fluidleitend zur Verfügung gestellt werden kann. Die Füllvorrichtung 6 weist darüber hinaus einen Antriebsabschnitt 46 auf, welcher dazu eingerichtet ist, mit der Füllrohraufnahme 34 über einen ersten Koppelabschnitt 36 (vgl. Fig. 4) in Kontakt zu treten. Eine in dem Antriebsabschnitt 46 generierte Rotationsbewegung kann auf diese Weise auf die Füllrohraufnahme 34 und damit das Füllrohr 20 aufgebracht werden, wenn sich das Füllrohr 20 in der Füllposition befindet, bei welchem die Füllrohraufnahme 34 in Kontakt tritt mit dem Antriebsabschnitt 46, wie noch beschrieben werden wird.

Die Zuführeinrichtung 18 weist ein Hüllenmagazin 10 auf, in dem Hüllen 16 angeordnet sind. Von dem Hüllenmagazin 10 wird eine Hülle 16 der Hüllen-Greifeinrichtung 12 zugeführt. Durch Bewegung der Hüllen-Greifeinrichtung 12 kann die zugeführte Hülle 16 zu dem Füllrohr 20 zentriert werden. Durch eine Bewegung der Füllrohrverstelleinrichtung 22 in Richtung des Antriebsabschnittes 46 findet eine Axialbewegung des Füllrohrs 20 in Richtung der Hüllen-Greifeinrichtung 12 statt. Eine relativ zu dem Füllrohr 20 zentrierte Hülle 16 kann nun dergestalt auf das Füllrohr 20 aufgebracht werden, dass das Füllrohr 20 axial in einen Hülleninnenraum einer Hülle 16 hineinbewegt wird. Die Hüllen-Greifeinrichtung 12 vermag es dabei sowohl eine Hülle 16 in einer zentrierten Position zu halten, als auch nach einer teilweisen Öffnung der Hüllen-Greifeinrichtung 12 diese zwar axial zu führen, insgesamt jedoch eine axiale Verschiebbarkeit einer Hülle 16 zuzulassen. Eine auf das Füllrohr 20 aufgebrachte Hülle 16 kann nun entgegen einer Darmbremse 24 vorgeschoben werden. Das Füllrohr 20 kann mittels des Antriebsabschnittes 46 in Rotation versetzt werden, wobei mittels des Darmbremse 24 Würstchenstränge ausgebildet werden, die mittels der Fördereinrichtung 14 weitertransportiert werden.

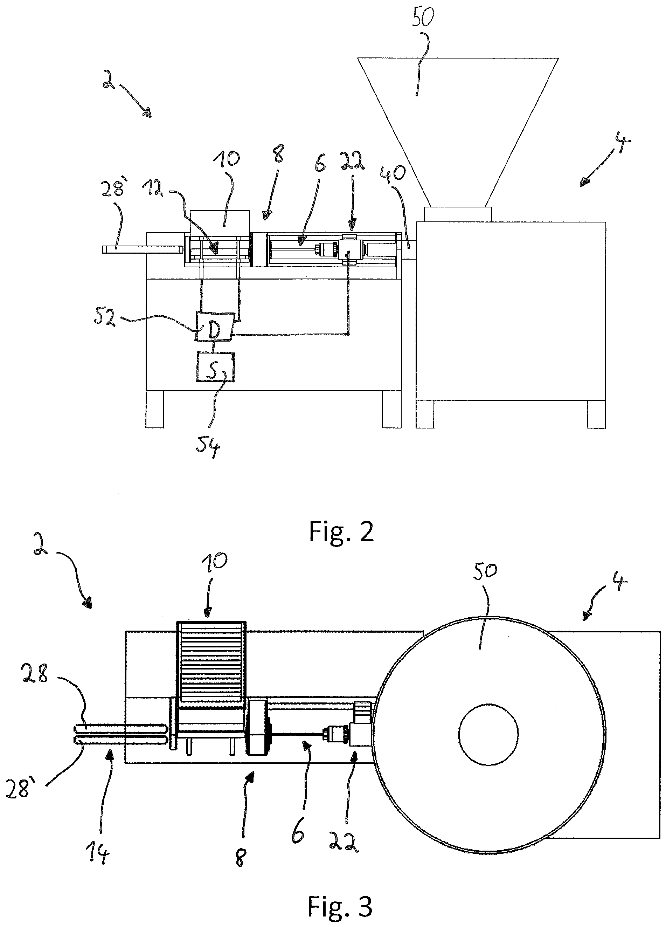

Weitere perspektivische Ansichten der eben beschriebenen Vorrichtung lassen sich den Figuren 2 und 3 entnehmen. Fig. 2 zeigt darüber hinaus eine Detektiereinrichtung 52, die mit der Hüllen-Greifeinrichtung 12 und der Füllrohrverstelleinrichtung 22 verbunden ist. Mit der Detektiereinrichtung 52 ist wiederum eine Steuerungseinrichtung 54 verbunden. Dabei ist die Steuerungseinrichtung 54 über die dargestellten Verbindungen auch zur Beeinflussung der Hüllen-Greifeinrichtung 12 und der Füllrohrverstelleinrichtung 22 eingerichtet.

Vergrößerte perspektivische Ansichten sind in den Figuren 4 und 5 dargestellt. Aus der Fig. 4 ist zunächst entnehmbar, dass die Hüllen-Greifeinrichtung 12 ein oberes Greifelement 42 sowie ein unteres Greifelement 42' aufweist, welche über Greifergestänge 44 verbunden und betätigbar sind. Darüber hinaus zeigt Fig. 4 den ersten Koppelabschnitt 36, der mit einem zweiten Koppelabschnitt 48 (in Fig. 4 nicht gezeigt) des Antriebsabschnittes 46 in Kontakt bringbar ist, um das Füllrohr 20 in Rotation zu versetzen. In dem in Fig. 4 gezeigten Betriebszustand wurde dem unteren Greifelement 42' eine Hülle 16 zugeführt. Das Füllrohr 20 befindet sich ferner in einer Axialposition, in der eine Spitze des Füllrohrs 20 noch nicht in einen Bereich der Hüllen-Greifeinrichtung 12 bewegt worden ist.

Bei dem in der Figur 5 gezeigten Zustand befindet sich die Hülle 16 nunmehr auf dem Abdrehrohr 20, wobei das Abdrehrohr 20 sich ferner insgesamt in einer Befüllposition befindet. Die Hülle 16 steht dabei in Kontakt mit dem Darmbremse 24 und die Hülle 16 kann mit einer pastösen Masse gefüllt werden. Ferner befindet sich die Hüllen-Greifeinrichtung 12 in einem geöffneten Zustand, sodass eine Rotation von Füllrohr 20 und Hülle 16 zugelassen wird. Ferner befindet sich der bewegliche Leitungsabschnitt 38 nunmehr in einem ausgefahrenen Zustand zur Herstellung einer fluidleitenden Verbindung zwischen Extrusionskopf 40 und Füllrohr 20. Durch die Kopplung der Füllrohraufnahme 34 (hier nicht sichtbar) mit dem Antriebsabschnitt 46 kann darüber hinaus eine Rotationsbewegung von dem Antriebsabschnitt 46 auf das Füllrohr 20 übertragen werden.

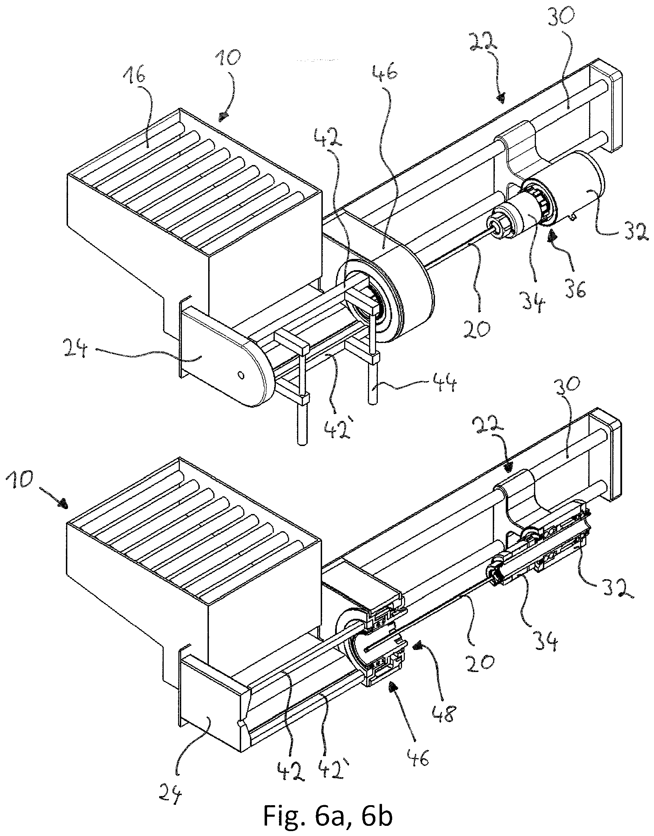

In den Figuren 6a bis 13b sind die erfindungsgemäßen Verfahrensschritte dargestellt. Die mit a und b benannten Figuren, welche jeweils die gleiche arabische Zahl aufweisen, stellen denselben Betriebszustand dar, zunächst aus einer perspektivischen Ansicht und sogleich aus einer Schnittansicht.

Die Figuren 6a und 6b zeigen zunächst einen Grundzustand, bei dem sich das Füllrohr 20 in einer Ausgangsposition befindet und jedenfalls noch nicht in dem Betriebsbereich der Greifelemente 42, 42' bewegt worden ist. Die Greifelemente 42, 42' sind geöffnet und diesen ist bereits eine Hülle 16 aus dem Magazin 10 zugeführt worden. Aus der Fig. 6b ist erkennbar, dass das Füllrohr 20 sich zunächst in einer Ausgangsposition befindet und lediglich in einen Bereich des Antriebsabschnittes 46 hineinreicht, nicht jedoch in den Bereich der Greifelemente 42, 42'.

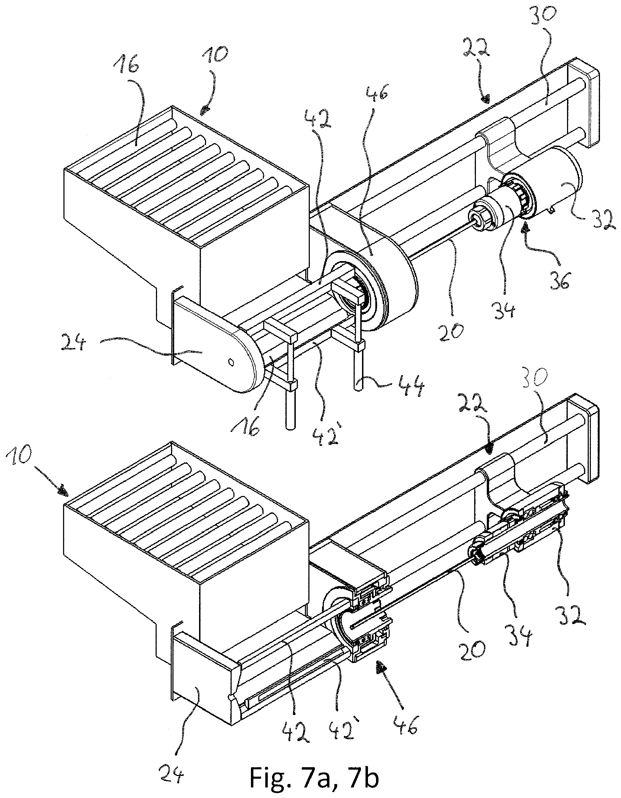

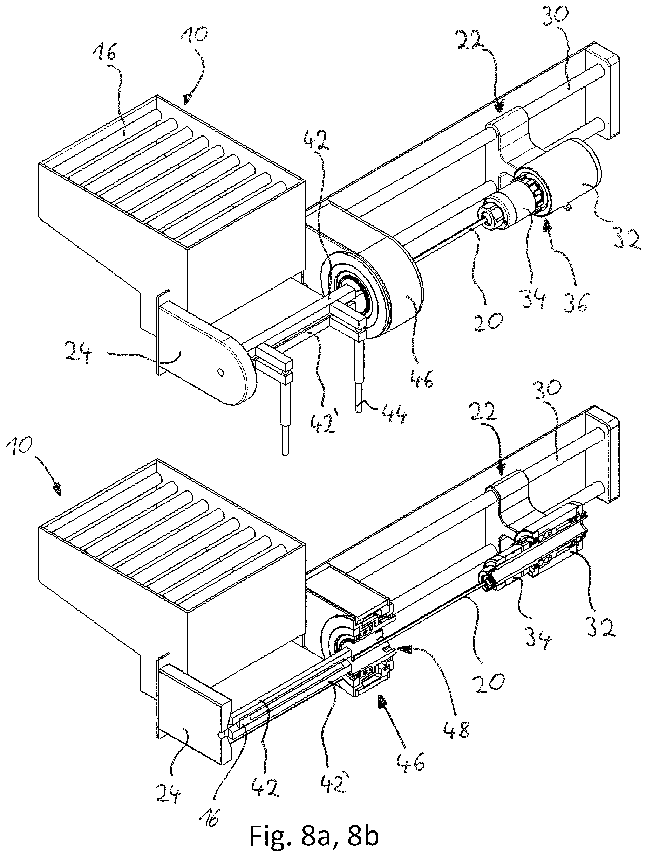

In dem in den Figuren 7a und 7b gezeigten Zustand wurde nunmehr eine Hülle 16 dem unteren Greifelement 42' zugeführt. Die Position des Füllrohrs 20 und damit der Füllrohrverstelleinrichtung 22 ist zunächst unverändert. In den Figuren 8a und 8b ist ein Betriebszustand gezeigt, bei dem die Greifelemente 42, 42' in unmittelbarem Kontakt zu der Hülle 16 stehen, sich die Greifelemente 42, 42' mithin in einem geschlossenen Zustand befinden. Hierdurch erfolgt eine Zentrierung der Hülle 16 relativ zu dem Füllrohr 20. Die Position des Füllrohrs 20 ist jedoch noch unverändert gegenüber dem in den Figuren 7a und 7b gezeigten Zustand.

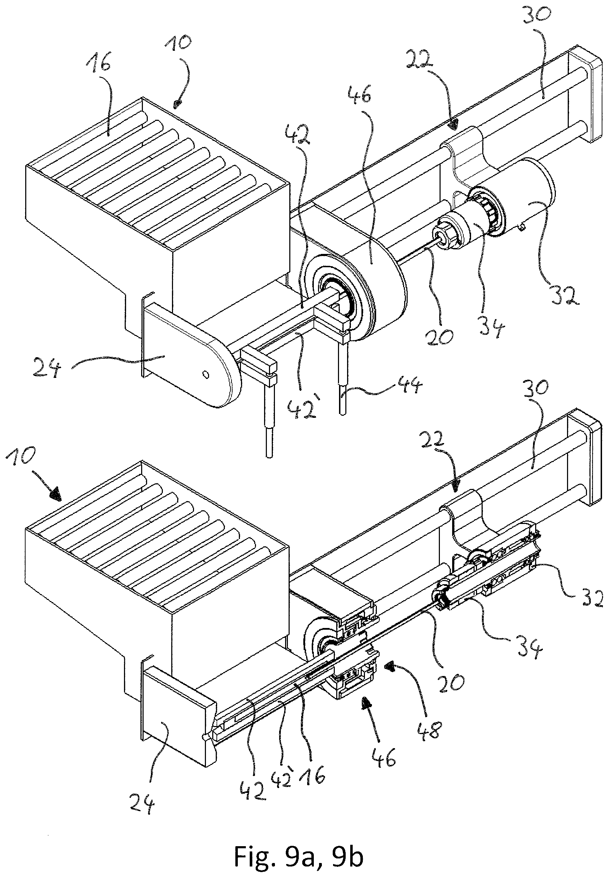

In den Figuren 9a und 9b ist ein Zustand gezeigt, bei dem die Greifelemente 42, 42' weiterhin geschlossen sind und das Füllrohr 20 mittels der Füllrohrverstelleinrichtung 22 axial in Richtung der Hülle 16 bewegt wurde. Da die Hülle 16 von den Greifelementen 42, 42' gehalten wird, führt eine Axialbewegung des Füllrohrs 20 in Richtung der Hülle 16 dazu, dass das Füllrohr 20 in einen Hülleninnenraum hineinbewegt wird und mithin die Hülle 16 teileweise auf das Füllrohr 20 aufgebracht wird.

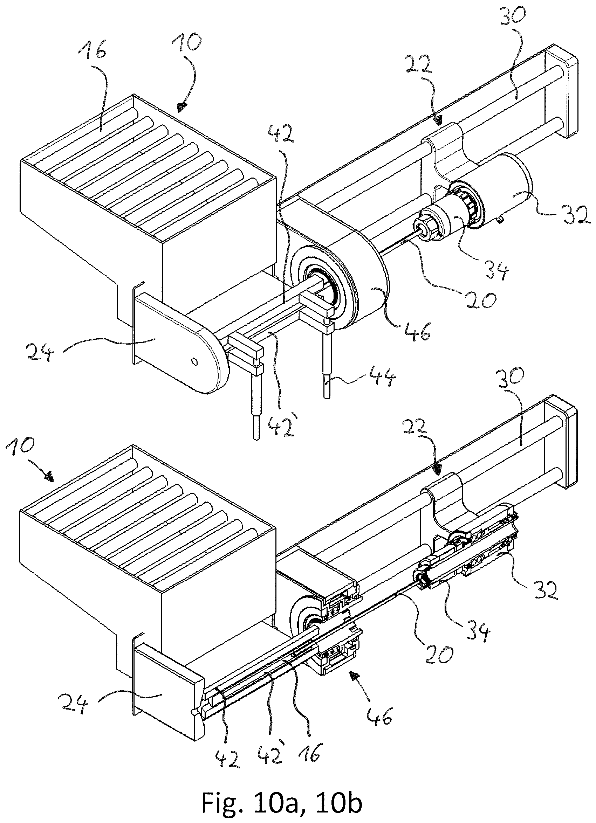

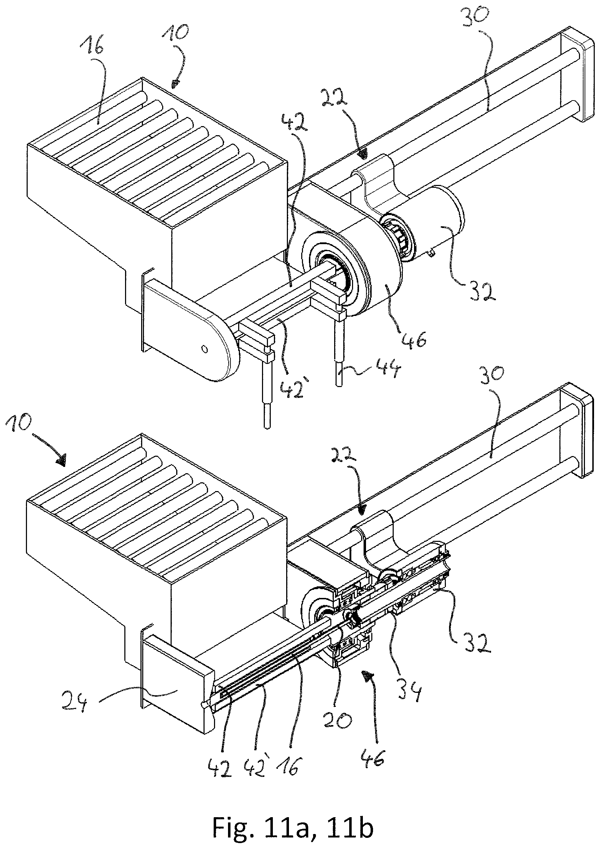

In dem in den Figuren 10a und 10b gezeigten Zustand sind die Greifelemente 42, 42' nunmehr geringfügig geöffnet worden. Dabei wird die Hülle 16, die teilweise auf das Füllrohr 20 aufgebracht ist, durch die Greifelemente 42, 42' geführt, ist jedoch axial zu den Greifelemente 42, 42' bewegbar. In den Figuren 11a und 11b ist bei weiterhin leicht geöffneten Greifelementen 42, 42' ein Zustand gezeigt, bei dem das Füllrohr 20 mittels der Füllrohrverstellvorrichtung 22 axial in Richtung der Darmbremse 24 bewegt worden ist. In einem ersten Bewegungsbereich führt die Axialbewegung des Füllrohrs 20 in Richtung der Darmbremse 24 dazu, dass die Hülle 16 ihre Position auf dem Füllrohr 20 beibehält und zwar so lange, bis das der Darmbremse 24 zugewandte Ende der Hülle 16 mit der Darmbremse 24 in Kontakt tritt. Ein weiteres Verschieben des Füllrohrs 20 in Richtung der Darmbremse 24 führt dann dazu, dass das Füllrohr 20 weiter in den Innenraum der Hülle 16 eingeschoben wird.

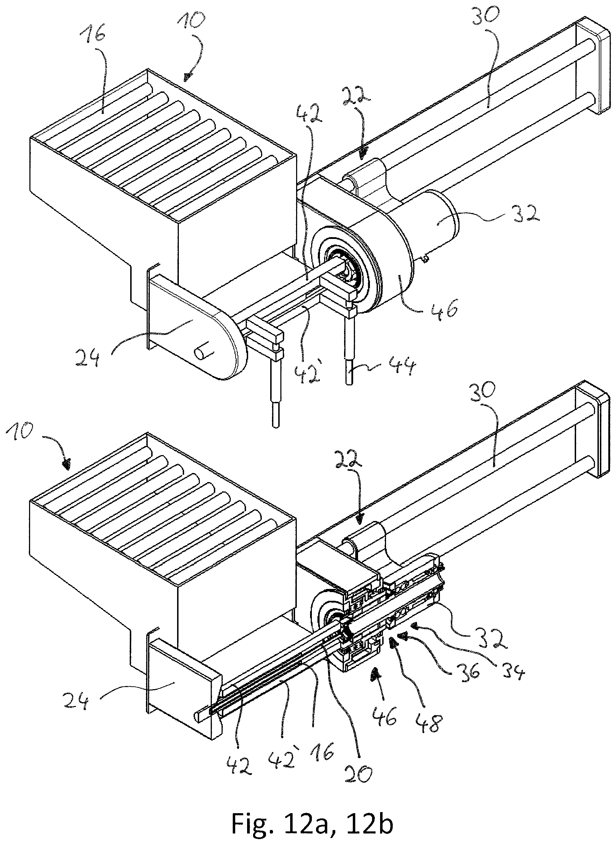

In den Figuren 12a und 12b ist jener Betriebszustand unmittelbar vor dem Befüllen der Hülle 16 gezeigt. Das Füllrohr 20 wurde nun mithilfe der Füllrohrverstelleinrichtung 22 in die Befüllposition bewegt. Die Hülle 16 steht nun in unmittelbaren Kontakt mit der Darmbremse 24. Ferner steht nun auch der zweite Koppelabschnitt 48 des Antriebsabschnittes 46 in Kontakt mit dem ersten Koppelabschnitt 36 der Füllrohraufnahme 34. Somit kann optional, etwa über eine formschlüssige oder kraftschlüssige Verbindung, ein Drehmoment von dem Antriebsabschnitt 46 auf die Füllrohraufnahme 34 und damit das Füllrohr 20 aufgebracht werden und das Füllrohr 20 in Rotation versetzt werden.

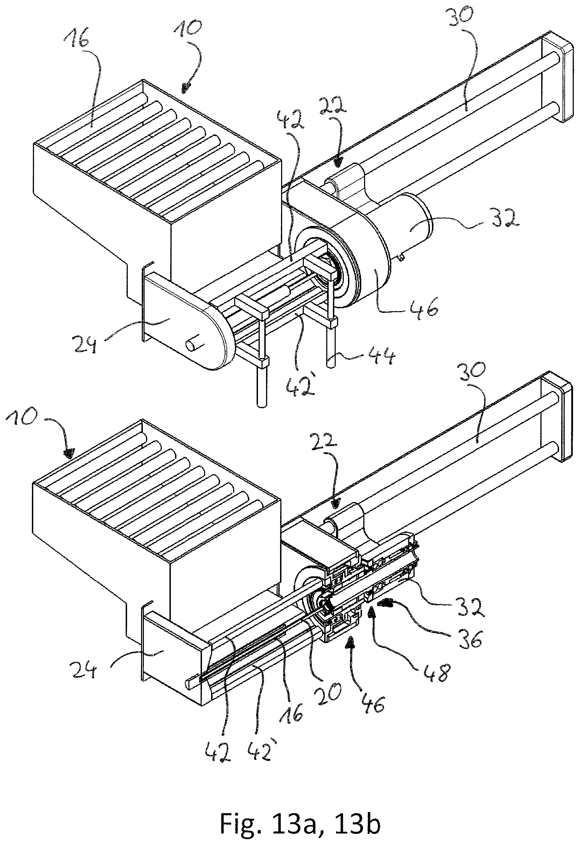

In dem in den Figuren 13a und 13b gezeigten Zustand befinden sich die Greifelemente 42, 42' in einem geöffneten Zustand und ermöglichen eine freie Rotierbarkeit des Füllrohrs 20 und der Hülle 16. Die Hülle 16 kann nun vollständig befüllt werden und eine neue Hülle 16 auf dem unteren Greifelement 42' abgelegt bzw. zu diesem zugeführt werden, nachdem die Füllrohrverstelleinrichtung 22 in ihre Ausgangsposition bewegt worden ist. Das Verfahren kann sodann ausgehend von dem in den Figuren 6a und 6b gezeigten Zustand von neuem beginnen.

### Liste der verwendeten Bezugszeichen

2 Vorsatzgerät
4 Maschine
6 Füllvorrichtung
8 Füllrohrbestückungsvorrichtung
10 Hüllenmagazin
12 Hüllen-Greifeinrichtung
14 Fördereinrichtung
16 Hülle
18 Zuführeinrichtung
20 Füllrohr
22 Füllrohrverstelleinrichtung
24 Darmbremse
26 Wurst
28, 28' Förderelement
30 Führung
32 Grundkörper
34 Füllrohraufnahme
36 Erster Koppelabschnitt
38 Beweglicher Leitungsabschnitt
40 Extrusionskopf
42 Oberes Greifelement
42' Unteres Greifelement
44 Greifergestänge
46 Antriebsabschnitt
48 Zweiter Koppelabschnitt
50 Fülltrichter
52 Detektiereinrichtung
54 Steuerungseinrichtung

## Patentansprüche

1. Verfahren zum Bestücken mindestens eines Füllrohrs (20) einer Vorrichtung (8) zum Befüllen von schlauchförmigen Hüllen mit einer gerafften, schlauchförmigen Hülle (16),
mindestens aufweisend die Schritte:
- Öffnen mindestens eines Greifelements (42, 42') einer Hüllen-Greifeinrichtung (12);
- Zuführen einer gerafften, schlauchförmigen Hülle (16) in einen Bereich des mindestens einen Greifelements (42, 42') der Hüllen-Greifeinrichtung (12);
- Schließen mindestens eines Greifelementes (42, 42') zur Fixierung und axialen Zentrierung der Hülle (16) entlang einer Längsachse eines Füllrohr (20), **gekennzeichnet durch** die Schritte:
- Bewegen des Füllrohrs (20) und/oder der Greifeinrichtung (12) relativ zueinander aufeinander zu zum Einbringen des Füllrohrs (20) in einen Innenraum der Hülle (16);
- Partielles Öffnen mindestens eines Greifelements (42, 42');
- Weiterbewegen des Füllrohrs (20) und/oder der Greifeinrichtung (12) relativ zueinander aufeinander zu, wobei das Füllrohr (20) die Hülle (16) in Bewegungsrichtung des Füllrohrs (20) relativ zu der Greifeinrichtung (12) mitnimmt und die Hülle (16) durch die Greifelemente (42, 42') geführt wird.

2. Verfahren nach Anspruch 1,
wobei das Einbringen des Füllrohrs (20) in den Hülleninnenraum bis zum Inkontakttreten des Füllrohrs (20) mit einem Endabschnitt der Hülle (16) erfolgt.

3. Verfahren nach Anspruch 1,
wobei das Füllrohr (20) teilweise in den Hülleninnenraum eingebracht wird.

4. Verfahren nach einem der vorhergehenden Ansprüche,
weiterhin aufweisend den Schritt:
- Axialbewegung des Füllrohrs (20) und/oder einer Darmbremse (24) in eine Befüllposition, bei welcher der Endabschnitt der Hülle (16) mit der Darmbremse (24) in Kontakt tritt.

5. Verfahren nach einem der vorhergehenden Ansprüche,
weiterhin aufweisend die Schritte:
- Öffnen mindestens eines Greifelements (42, 42'), insbesondere kontinuierlich oder schrittweise;
- Befüllen der Hülle (16), insbesondere mit einer pastösen Masse.

6. Verfahren nach einem der vorhergehenden Ansprüche,
weiterhin aufweisend die Schritte:
- Ermitteln des Durchmessers der Hülle (16), und/oder
- Detektieren einer Fehlbeladung der Greifelemente (42, 42').

7. Verfahren nach einem der vorhergehenden Ansprüche,
weiterhin aufweisend den Schritt:
- Nachführen der Hülle (16) in Richtung der Darmbremse (24) während des Befüllens der Hülle (16).

8. Vorrichtung (6) zum Befüllen von schlauchförmigen Hüllen (16), mit
- einer Zuführeinrichtung (10) zum Zuführen einer gerafften, schlauchförmigen Hülle (16) zu einer Hüllen-Greifeinrichtung (12),
- einer Hüllen-Greifeinrichtung (12) mit relativ zueinander bewegbaren Greifelementen (42, 42') zum Greifen und Ausrichten einer gerafften, schlauchförmigen Hülle (16) relativ zu einer Zentrierachse,
- einem Füllrohr (20), welches zur Aufnahme der gerafften, schlauchförmigen Hülle (16) ausgebildet ist, zur Abgabe einer pastösen Masse
**dadurch gekennzeichnet, dass** das Füllrohr (20) und/oder die Hüllen-Greifeinrichtung (12) relativ zueinander axial beweglich angeordnet sind,
und dass eine Steuerungseinrichtung (54) vorgesehen ist, die dazu eingerichtet ist, die folgenden Schritte auszuführen:
- Bewegen des Füllrohrs (20) und/oder der Greifeinrichtung (12) relativ zueinander aufeinander zu zum Einbringen des Füllrohrs (20) in einen Innenraum der Hülle (16);
- Partielles Öffnen mindestens eines Greifelements (42, 42');
- Weiterbewegen des Füllrohrs (20) und/oder der Greifeinrichtung (12) relativ zueinander aufeinander zu, wobei das Füllrohr (20) die Hülle (16) in Bewegungsrichtung des Füllrohrs (20) relativ zu der Greifeinrichtung (12) mitnimmt und die Hülle (16) durch die Greifelemente (42, 42') geführt wird.

9. Vorrichtung (6) nach Anspruch 8,
**gekennzeichnet durch** eine Detektiereinrichtung (52) zur Detektion der Position mindestens eines der Greifelemente (42, 42') und/oder der Axialposition des Füllrohrs (20) und/oder der Greifeinrichtung (12).

10. Vorrichtung (6) nach Anspruch 9,
**dadurch gekennzeichnet, dass** die Detektiereinrichtung (52) einen Kraftsensor zur Ermittlung der an den Greifelementen (42, 42') und/oder dem Füllrohr (20) auftretenden Kräfte aufweist.

11. Vorrichtung (6) nach einem der Ansprüche 8 bis 10,
**dadurch gekennzeichnet, dass** die Steuerungseinrichtung (54) dazu eingerichtet ist, den Durchmesser der Hüllen (16) und/oder eine Fehlbeladung der Greifelemente (42, 42') zu ermitteln.

12. Vorrichtung (6) nach einem der vorstehenden Ansprüche 8 bis 11, **gekennzeichnet durch** eine Darmbremse (24).

13. System zum Befüllen geraffter, schlauchförmiger Hüllen (16), mit
- einer Füllmaschine (4) zum Bereitstellen einer pastösen Masse für eine Vorrichtung zum Befüllen von schlauchförmigen Hüllen (6), und
- einer Vorrichtung (6) zum Befüllen von schlauchförmigen Hüllen (16) nach einem der vorstehenden Ansprüche 8 bis 12.

## Claims

1. A method of equipping at least one filling tube (20) of an apparatus (8) for filling tubular cases with a gathered tubular case (16),
at least comprising the steps:
- opening at least one gripping element (42, 42') of a case gripping device (1),
- feeding a gathered tubular case (16) into a region of the at least one gripping element (42, 42') of the case gripping device (12),
- closing at least one gripping element (42, 42') for fixing and axially centering the case (16) along a longitudinal axis of a filling tube (20), **characterised by** the steps:
- moving the filling tube (20) and/or the gripping device (12) relative to each other towards each other for introducing the filling tube (20) into an interior space of the case (16),
- partially opening at least one gripping element (42, 42'), and
- further moving the filling tube (20) and/or the gripping device (12) relative to each other towards each other, wherein the filling tube (20) entrains the case (16) in the direction of movement of the filling tube (20) relative to the gripping device (12) and the case (16) is guided by the gripping elements (42, 42').

2. A method as set forth in claim 1
wherein the operation of introducing the filling tube (20) into the case interior is effected until the filling tube (20) comes into contact with an end portion of the case (16).

3. A method as set forth in claim 1
wherein the filling tube (20) is partially introduced into the case interior.

4. A method as set forth in one of the preceding claims and further comprising the step:
- axially moving the filling tube (20) and/or a casing brake (24) into a filling position in which the end portion of the case (16) comes into contact with the casing brake (24).

5. A method as set forth in one of the preceding claims and further comprising the steps:
- opening at least one gripping element (42, 42'), in particular continuously or stepwise, and
- filling the case (16) in particular with a pasty material.

6. A method as set forth in one of the preceding claims and further comprising the steps:
- ascertaining the diameter of the case (16), and/or
- detecting incorrect loading of the gripping elements (42, 42').

7. A method as set forth in one of the preceding claims and further comprising the step:
- further following movement of the case (16) in the direction of the casing brake (24) during the operation of filling the case (16).

8. Apparatus (6) for filling tubular cases (16) comprising
- a feed device (10) for feeding a gathered tubular case (16) to a case gripping device (12),
- a case gripping device (12) having gripping elements (42, 42') which are moveable relative to each other for gripping and orienting a gathered tubular case (16) relative to a centering axis,
- a filling tube (20) adapted to receive the gathered tubular case (16), for delivery of a pasty material,
**characterised in that** the filling tube (20) and/or the case gripping device (12) are arranged axially moveably relative to each other, and
there is provided a control device (54) adapted to carry out the following steps:
- moving the filling tube (20) and/or the gripping device (12) relative to each other towards each other for introducing the filling tube (20) into an interior space of the case (16),
- partially opening at least one gripping element (42, 42'), and
- further moving the filling tube (20) and/or the gripping device (12) relative to each other towards each other, wherein the filling tube (20) entrains the case (16) in the direction of movement of the filling tube (20) relative to the gripping device (12) and the case (16) is guided by the gripping elements (42, 42').

9. Apparatus (6) as set forth in claim 8
**characterised by** a detecting device (52) for detecting the position of at least one of the gripping elements (42, 42') and/or the axial position of the filling tube (20) and/or the gripping device (12).

10. Apparatus (6) as set forth in claim 9
**characterised in that** the detecting device (52) has a force sensor for ascertaining the forces occurring at the gripping elements (42, 42') and/or the filling tube (20).

11. Apparatus (6) as set forth in one of claims 8 through 10
**characterised in that** the control device (54) is adapted to ascertain the diameter of the cases (16) and/or incorrect loading of the gripping elements (42, 42').

12. Apparatus (6) as set forth in one of the preceding claims 8 to 11
**characterised by** a casing brake (24).

13. A system for filling gathered tubular cases (16) comprising
- a filling machine (4) for providing a pasty material for an apparatus for filling tubular cases (6) and
- an apparatus (6) for filling tubular cases (16) as set forth in one of the preceding claims 8 to 12.

## Revendications

1. Procédé d'équipement d'au moins un tube de remplissage (20) d'un dispositif (8) servant au remplissage d'enveloppes tubulaires d'une enveloppe (16) tubulaire froncée,
présentant au moins les étapes :
- d'ouverture d'au moins un élément de préhension (42, 42') d'un équipement de préhension d'enveloppes (12) ;
- d'amenée d'une enveloppe (16) tubulaire froncée dans une zone de l'au moins un élément de préhension (42, 42') de l'équipement de préhension d'enveloppes (12) ;
- de fermeture d'au moins un élément de préhension (42, 42') pour bloquer et centrer de manière axiale l'enveloppe (16) le long d'un axe longitudinal d'un tube de remplissage (20), **caractérisé par** les étapes :
- de déplacement du tube de remplissage (20) et/ou de l'équipement de préhension (12) l'un vers l'autre l'un par rapport à l'autre pour introduire le tube de remplissage (20) dans un espace intérieur de l'enveloppe (16) ;
- d'ouverture partielle d'au moins un élément de préhension (42, 42') ;
- de poursuite du déplacement du tube de remplissage (20) et/ou de l'équipement de préhension (12) l'un vers l'autre l'un par rapport à l'autre, dans lequel le tube de remplissage (20) entraîne l'enveloppe (16) dans la direction de déplacement du tube de remplissage (20) par rapport à l'équipement de préhension (12) et l'enveloppe (16) est guidée par les éléments de préhension (42, 42').

2. Procédé selon la revendication 1,
dans lequel l'introduction du tube de remplissage (20) dans l'espace intérieur d'enveloppe est effectuée jusqu'à l'entrée en contact du tube de remplissage (20) avec une section d'extrémité de l'enveloppe (16).

3. Procédé selon la revendication 1,
dans lequel le tube de remplissage (20) est introduit en partie dans l'espace intérieur d'enveloppe.

4. Procédé selon l'une quelconque des revendications précédentes,
présentant par ailleurs l'étape :
- de déplacement axial du tube de remplissage (20) et/ou d'un freine-boyau (24) dans une position de remplissage, pour laquelle la section d'extrémité de l'enveloppe (16) entre en contact avec le freine-boyau (24).

5. Procédé selon l'une quelconque des revendications précédentes,
présentant par ailleurs les étapes :
- d'ouverture d'au moins un élément de préhension (42, 42'), en particulier en continu ou progressivement ;
- de remplissage de l'enveloppe (16), en particulier avec une masse pâteuse.

6. Procédé selon l'une quelconque des revendications précédentes,
présentant par ailleurs les étapes :
- de détermination du diamètre de l'enveloppe (16), et/ou
- de détection d'un chargement erroné des éléments de préhension (42, 42').

7. Procédé selon l'une quelconque des revendications précédentes,
présentant par ailleurs l'étape :
- de guidage ultérieur de l'enveloppe (16) en direction du freine-boyau (24) au cours du remplissage de l'enveloppe (16) .

8. Dispositif (6) de remplissage d'enveloppes (16) tubulaires, avec
- un équipement d'amenée (10) pour amener une enveloppe (16) tubulaire froncée à un équipement de préhension d'enveloppes (12),
- un équipement de préhension d'enveloppes (12) avec des éléments de préhension (42, 42') pouvant être déplacés les uns par rapport aux autres pour la préhension et l'orientation d'une enveloppe (16) tubulaire froncée par rapport à un axe de centrage,
- un tube de remplissage (20), lequel est réalisé pour recevoir l'enveloppe (16) tubulaire froncée, pour la distribution de masse pâteuse,
**caractérisé en ce que** le tube de remplissage (20) et/ou l'équipement de préhension d'enveloppes (12) sont disposés de manière mobile axialement l'un par rapport à l'autre,
et qu'un équipement de commande (54) est prévu, qui est mis au point pour exécuter les étapes suivantes :
- de déplacement du tube de remplissage (20) et/ou de l'équipement de préhension (12) l'un vers l'autre l'un par rapport à l'autre pour introduire le tube de remplissage (20) dans un espace intérieur de l'enveloppe (16) ;
- d'ouverture partielle d'au moins un élément de préhension (42, 42') ;
- de poursuite du déplacement du tube de remplissage (20) et/ou de l'équipement de préhension (12) l'un vers l'autre l'un par rapport à l'autre, dans lequel le tube de remplissage (20) entraîne l'enveloppe (16) dans la direction de déplacement du tube de remplissage (20) par rapport à l'équipement de préhension (12) et l'enveloppe (16) est guidée par les éléments de préhension (42, 42').

9. Dispositif (6) selon la revendication 8,
**caractérisé par** un équipement de détection (52) pour la détection de la position d'au moins un des éléments de préhension (42, 42') et/ou de la position axiale du tube de remplissage (20) et/ou de l'équipement de préhension (12).

10. Dispositif (6) selon la revendication 9,
**caractérisé en ce que** l'équipement de détection (52) présente un capteur de force de détermination des forces apparaissant sur les éléments de préhension (42, 42') et/ou le tube de remplissage (20).

11. Dispositif (6) selon l'une quelconque des revendications 8 à 10,
**caractérisé en ce que** l'équipement de commande (54) est mis au point pour déterminer le diamètre des enveloppes (16) et/ou un chargement erroné des éléments de préhension (42, 42').

12. Dispositif (6) selon l'une quelconque des revendications 8 à 11,
**caractérisé par** un freine-boyau (24).

13. Système de remplissage d'enveloppes (16) tubulaires froncées, avec
- une machine de remplissage (4) pour fournir une masse pâteuse pour un dispositif de remplissage d'enveloppes (6) tubulaires, et
- un dispositif (6) de remplissage d'enveloppes (16) tubulaires selon l'une quelconque des revendications précédentes 8 à 12.
